Europäisches Patentamt

European Patent Office

Office européen des brevets

(11) Numéro de publication: **0 112 251**
**A1**

## (12) DEMANDE DE BREVET EUROPEEN

(21) Numéro de dépôt: 83402417.6

(22) Date de dépôt: 14.12.83

(51) Int. Cl.³: **F 01 P 3/18**
**B 60 K 11/04, F 28 D 1/02**

(30) Priorité: 16.12.82 FR 8221114

(43) Date de publication de la demande:
27.06.84 Bulletin 84/26

(84) Etats contractants désignés:
AT BE CH DE GB IT LI LU NL SE

(71) Demandeur: SOCIETE ANONYME DES USINES
CHAUSSON
35 rue Malakoff
F-92600 Asnieres(FR)

(72) Inventeur: Moranne, Jean-Pierre
17 rue de Bellevue
F-95320 St Leu-la-Forêt Val d'Oise(FR)

(74) Mandataire: Madeuf, René Louis et al,
Cabinet Madeuf 3, Avenue Bugeaud
F-75116 Paris(FR)

(54) Echangeur de chaleur à tubes longs pour véhicules poids lourds.

(57) L'échangeur de chaleur pour poids lourds comporte des tubes de circulation (1) engagés dans des plaques collectrices (3) et reliés à des dissipateurs (2), les plaques collectrices sont recouvertes par des boîtes à eau (10) en matière moulée rigide et des joues latérales (4) sont disposées entre les plaques collectrices sans y être fixées pour former entretoises entre celles-ci. D'une part, les plaques collectrices (3) présentent au moins une partie déformable entre leur partie recevant les tubes (1) et leur partie reliée aux boîtes à eau (10) et, d'autre part, les boîtes à eau sont reliées rigidement à des montants latéraux (15) pour former avec ceux-ci un cadre rigide.

./...

Fig.1

Echangeur de chaleur à tubes longs pour véhicules poids lourds.

La présente invention concerne un nouvel échangeur thermique, en particulier pour poids lourds, qui concilie les avantages que présentent les faisceaux échangeurs à tubes et dissipateurs brasés et les avantages que présentent les échangeurs assemblés mécaniquement.

Il est bien connu dans la technique que les échangeurs pour véhicules poids lourds sont soumis à des contraintes particulières dues à plusieurs facteurs. Tout d'abord ces appareils sont généralement de grandes dimensions et, par conséquent, les tubes de circulation qu'ils présentent sont de grandes longueurs, par exemple jusqu'à 1 mètre et plus. La température des tubes varie considérablement, notamment l'hiver ou dans des régions froides, et les variations de température sont particulièrement brutales au moment de l'ouverture des clapets ou des volets thermométriques assurant la régulation du circuit de refroidissement d'un moteur. Il résulte de cela que la mesure de la dilatation des tubes est importante. Les échangeurs montés sur des poids lourds sont, par ailleurs, soumis à des vibrations importantes dues au fonctionnement des moteurs diesel et dues également au roulement du véhicule sur des routes en mauvais état ou des pistes.

Les spécialistes savent bien que, quelle que soit leur construction, les châssis de véhicules sont toujours soumis à des déformations au moins temporaires et ces déformations sont souvent transmises à l'échangeur qui est une pièce fragile.

Pour pallier à ces derniers inconvénients, différents dispositifs de suspension élastique des échangeurs ont déjà été proposés dans la technique.

Il a aussi été proposé de disposer un échangeur à l'intérieur d'un cadre rigide en suspendant élastiquement l'échangeur dans le cadre qui est relié, par ailleurs, au véhicule.

La Demanderesse a elle-même proposé dans son brevet français publié sous le No 2 455 524 de protéger un échangeur pour poids lourds des vibrations dues au roulement et au moteur diesel en exerçant sur les pièces de l'échangeur une précontrainte élastique appliquée sur les boîtes à eau et faisant que la fréquence propre de l'échangeur est toujours différente de la fréquence des vibrations qui peuvent lui être transmises.

La présente invention concerne un nouvel échangeur qui tient compte des différents problèmes exposés ci-dessus et qui permet, en outre, une réalisation économique, un grand nombre de pièces de l'échangeur pouvant être utilisées pour la réalisation d'appareils présentant des caractéristiques de dissipation thermique différentes.

Conformément à l'invention, l'échangeur de chaleur, en particulier un échangeur refroidisseur pour poids lourds comportant des tubes de circulation engagés dans des plaques collectrices étant recouvertes par des boîtes à eau en matière moulée rigide et des joues latérales étant disposées entre les plaques collectrices sans y être fixées pour former entretoises entre celles-ci, est caractérisé en ce que, d'une part, les plaques collectrices présentent au moins une partie déformable entre leur partie recevant les tubes et leur partie reliée au boîtes à eau et que, d'autre part, les boîtes à eau sont reliées rigidement à des montants latéraux pour former, avec ceux-ci, un cadre rigide.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une perspective partielle en partie arrachée d'un échangeur de chaleur conforme à l'invention.

La fig. 2 est une perspective partielle illustrant un détail de réalisation.

La fig. 3 est un plan partiel vu de dessus, correspondant à la fig. 2.

La fig. 4 est une coupe transversale explicative.

L'échangeur représenté au dessin comporte des tubes de circulation 1 entre lesquels sont disposés des dissipateurs 2 constitués avantageusement sous la forme de bandes ondulées.

Les extrémités des tubes sont engagées, de façon connue en soi, dans des plaques collectrices 3 et des joues latérales 4 sont disposées entre les collecteurs 3 pour s'étendre de l'un à l'autre en constituant des entretoises définissant la distance théorique devant séparer les deux plaques collectrices 3 lors de l'assemblage.

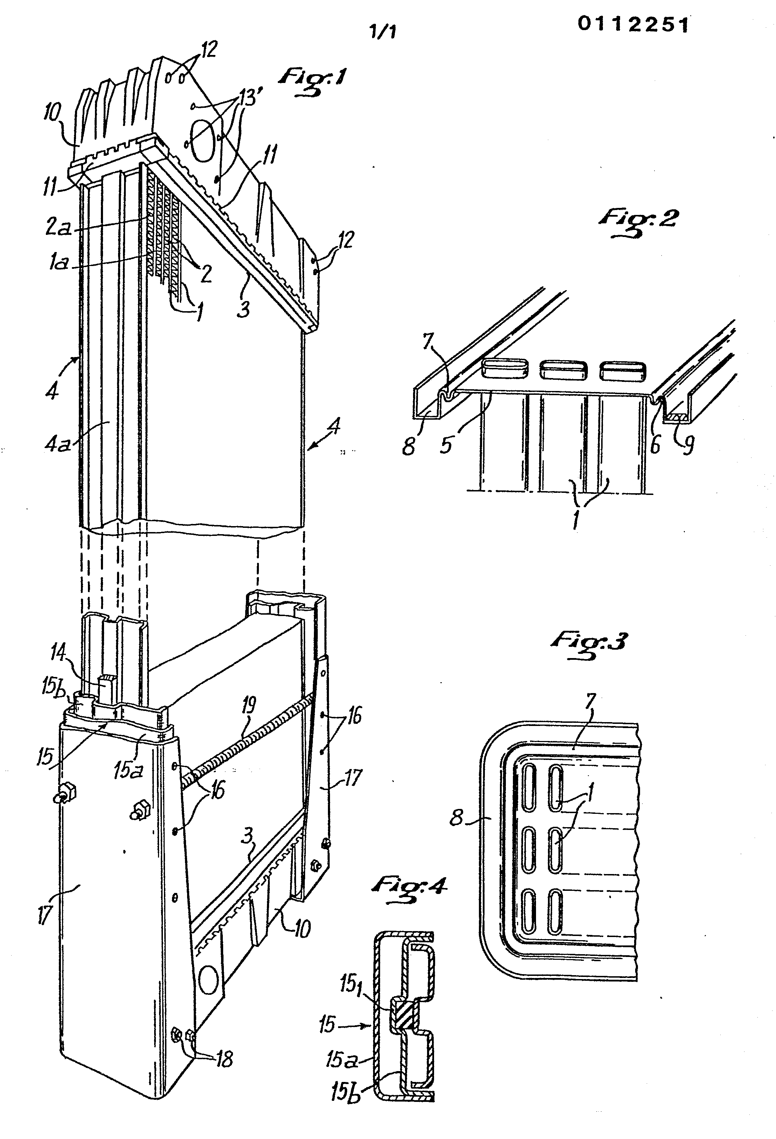

Le bloc constitué par les tubes 1, les dissipateurs 2, les joues latérales 4, et éventuellement les plaques collectrices 3 est brasé. La brasure relie seulement les joues aux dernières rangées 2a des dissipateurs sans qu'une liaison brasée soit recherchée avec les plaques collectrices. Au contraire, il est préféré qu'il n'y ait pas de liaison directe entre les joues et les plaques collectrices, tout au moins avec la partie de celles-ci dans laquelle débouchent les tubes 1. Dans certain cas la brasure avec la dernière rangée de dissipateurs 2a est même interrompue sur une certaine longueur et il est de toute façon prévu que la dernière rangée, de chaque côté, des dissipateurs 2a puisse être déformable afin qu'il n'existe pas une liaison rigide entre la dernière rangée de tube 1a et la joue correspondante 4. Les plaques collectrices 3 sont constituées pour présenter au moins une partie déformable 5 dans laquelle débouchent les tubes 1. Dans l'exemple selon les fig. 2 et 3, la partie 5 est une partie plane qui est séparée du bord périphérique 6 de la plaque par au moins une ondulation 7 qui, de préférence, s'étend sur tout le pourtour de la plaque collectrice.

Le dessin montre une ondulation simple mais celle-ci peut être à plusieurs ondes si l'on désire que la partie 5 puisse être très mobile.

Chaque plaque collectrice est conformée pour délimiter à sa périphérie une gorge 8 destinée à recevoir un joint déformable 9 sur lequel est serrée la partie inférieure d'une boîte à eau 10.

La fig. 1 montre que le serrage de la boîte à eau est réalisé, par exemple par des bandes de sertissage 11.

Les boîtes à eau sont fabriquées en matière moulée, de préférence en métal moulé, par exemple en alliage léger. Ces boîtes à eau sont usinées pour présenter des trous taraudés 12 servant à la fixation de goussets décrits dans ce qui suit et aussi de jeux de trous taraudés tels que 13 pour la fixation de pièces de liaison permettant de raccorder chaque boîte à eau 10 à des tubulures d'amenée et de sortie des liquides ainsi qu'à différents accessoires.

Les joues latérales 4 qui forment entretoises entre les plaques collectrices présentent sensiblement la forme de la lettre $\Omega$ ou une autre forme faisant que la surface d'application sur les dissipateurs $2\underline{a}$ est aussi faible que possible et faisant aussi qu'au moins une surface d'appui externe $4\underline{a}$ est ménagée sur chaque joue.

Une pièce élastique 14, par exemple une baguette en élastomère, est disposée sur la surface d'appui externe $4\underline{a}$ de chaque joue et maintenue en appui par un montant 15.

Comme le montrent les fig. 1 et 4, chaque montant 15 comporte deux profilés $15\underline{a}$, $15\underline{b}$ emboîtés l'un dans l'autre pour former une poutre creuse. Le profilé $15\underline{a}$ est avantageusement constitué par un profilé en U et le profilé $15\underline{b}$, dont des ailes latérales sont fixées à l'intérieur de celles du profilé $15\underline{a}$, délimite une rainure médiane $15_1$ pour le logement de la baguette en élastomère $14_1$. La constitution sous forme de poutre creuse des montants 15 est destinée à leur conférer une grande rigidité.

Les montants 15 sont reliés par exemple par des soudures 16 à des goussets 17 qui emboîtent les extrémités des boîtes à eau 10. Des boulons 18 traversent les goussets 17 et sont vissés dans les trous taraudés 12.

Les deux goussets 17 correspondant à chaque boîte à eau sont reliés entre eux par des tirants de serrage 19.

L'action de serrage exercée par les tirants sur les goussets est, évidemment, transmise aux montants 15 et appliquée par les pièces élastiques correspondantes 14
à la joue 4a de sorte que l'ensemble tube dissipateur
est soumis à une précontrainte, tant lorsque l'échangeur
est froid que lorsqu'il est chauffé par le liquide circulant dans les tubes.

La précontrainte étant exercée par l'intermédiaire des
pièces élastiques 14 et les joues 4 étant reliées au
premier rang de tubes par l'intermédiaire de la première
rangée de dissipateurs 2a, cette première rangée, de même
que les autres rangées de tubes 2, peuvent être soumises à
des dilatations différentielles puisqu'ils peuvent se déplacer, tant par rapport aux joues que par rapport aux montants 15.

Les montants 15 en forme de poutre creuse présentent, en
ce qui les concerne, une grande rigidité et il en est de
même des goussets 17 fabriqués de préférence en matière
moulée, par exemple en alliage léger. Les goussets étant
eux-mêmes reliés de façon rigide aux boîtes à eau 10 en
matière moulée, il en résulte que l'ensemble boîtes à eau
10, goussets 17 et montants 15 constitue un cadre extrêmement rigide à l'intérieur duquel le faisceau proprement
dit, c'est-à-dire les tubes 1 et dissipateurs 2, est
fermement maintenu. Seul le déplacement des tubes dû à
leur dilatation est rendu possible par la mise en oeuvre
des plaques collectrices déformables telles que décrites
par exemple aux fig. 2 et 3. On voit par ce qui précède
que le faisceau proprement dit, dont les pièces, à savoir
les tubes et les dissipateurs, sont fragiles à paroi mince,
et pour que la dissipation thermique soit bonne, est
maintenu sous une précontrainte transversale empêchant
que les tubes puissent gonfler même si le liquide de circulation est sous pression et, d'autre part, ces tubes peuvent se dilater librement à l'intérieur d'un cadre formant un châssis rigide.

Pour le montage de l'échangeur décrit ci-dessus à la caisse d'un véhicule, on prévoit des pièces de fixation quelconques elles-mêmes reliées, soit aux montants 15, soit aux goussets 17, soit le cas échéant aux boîtes à eau 10. Ces pièces sont de préférence reliées à la caisse du véhicule par des suspensions élastiques faisant que le cadre rigide, boîte à eau, gousset, montant est lui-même suspendu élastiquement. Il est important de constater que la réalisation décrite dans ce qui précède permet de réaliser des échangeurs, par exemple des radiateurs de refroidissement présentant des caractéristiques de dissipation très différentes tout en conservant les mêmes boîtes à eau, les mêmes goussets, les mêmes tirants et les mêmes plaques collectrices, seuls les joues, les tubes, les dissipateurs et les montants étant de longueurs différentes mais réalisés à partir des mêmes profilés. Il est ainsi possible de standardiser la fabrication et d'abaisser, par conséquent, le prix de revient des appareils.

L'invention n'est pas limitée à l'exemple de réalisation représenté et décrit en détail, car diverses modifications peuvent y être apportées sans sortir de son cadre.

## Revendications

1 - Echangeur de chaleur en particulier échangeur refroidisseur pour poids lourds comportant des tubes de circulation (1) engagés dans des plaques collectrices (3) et reliés à des dissipateurs (2), les plaques collectrices étant recouvertes par des boîtes à eau (10) en matière moulée rigide et des joues latérales (4) étant disposées entre les plaques collectrices sans y être fixées pour former entretoisesentre celles-ci, caractérisé en ce que,d'une part, les plaques collectrices (3) présentent au moins une partie déformable entre leur partie (5) recevant les tubes (1) et leur partie (8) reliée aux boîtes à eau (10) et que, d'autre part, les boîtes à eau sont reliées rigidement à des montants latéraux (15) pour former avec ceux-ci un cadre rigide.

2 - Echangeur de chaleur suivant la revendication 1, caractérisé en ce que le cadre rigide (10, 15) est muni de pièces de fixation et est suspendu élastiquement à la caisse d'un véhicule.

3 - Echangeur de chaleur suivant l'une des revendications 1 ou 2, caractérisé en ce que les montants (15) sont constitués par des profilés (15a, 15b) fixés à leurs extrémités à des goussets eux-mêmes fixés aux boîtes à eau en matière moulée.

4 - Echangeur de chaleur suivant l'une des revendications 1 à 3, caractérisé par des pièces élastiques interposées entre les montants (15) et les joues (4) et par des tirants de serrage (19) faisant exercer une pression sur les joues (4) par les pièces élastiques (14) en maintenant ainsi les tubes (1) et dissipateurs (2) sous une précontrainte permanente, les montants formant en même temps une poutre creuse.

5 - Echangeur de chaleur suivant l'une des revendications 1 à 4, caractérisé en ce que les boîtes à eau sont constituées par des pièces en métal moulé présentant des usinages, notamment des taraudages (12, 13), pour la fixation d'accessoires et la fixation des goussets (17).

6 - Echangeur de chaleur suivant l'une des revendications 1 à 5, caractérisé en ce que les joues présentent sensiblement la forme de la lettre $\Omega$ et délimitent une surface d'appui externe pour les pièces élastiques par l'intermédiaire de laquelle une précontrainte est exercée tout en permettant un mouvement relatif entre les joues (4) et les montants (15).

7 - Echangeur de chaleur suivant l'une des revendications 1 à 6, caractérisé en ce que les parties déformables (7) de chaque plaque collectrice comportent au moins une ondulation.

1/1
0112251

Fig:1
Fig:2
Fig:3
Fig:4

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,Y | EP-A-0 020 190  (CHAUSSON)<br>* Page 4, lignes 6-35 * | 1,2,3 | F 01 P    3/18<br>B 60 K   11/04<br>F 28 D    1/02 |
| | --- | | |
| Y | US-A-4 316 503  (NIPPONDENSO)<br>* Colonne  2, ligne 27 - colonne 3, ligne 50 * | 1,7 | |
| | --- | | |
| A | EP-A-0 052 291  (NISSAN)<br>* Page  5,  ligne  23  - page 6, ligne 26 * | 1 | |
| | --- | | |
| A | US-A-3 165 151  (YOUNG)<br>* Colonne 3, lignes 4-70 * | 3 | |
| | --- | | |
| A | FR-A-2 031 668  (CHAUSSON)<br>* Page 6, lignes 3-21 * | 5 | |
| | ----- | | |

**DOMAINES TECHNIQUES RECHERCHES (Int. Cl. ³)**

F 01 P
B 60 K
F 28 D

Le présent rapport de recherche a été établi pour toutes les revendications

| Lieu de la recherche | Date d'achèvement de la recherche | Examinateur |
|---|---|---|
| LA HAYE | 13-02-1984 | WASSENAAR G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82